**Europäisches Patentamt**

**European Patent Office**

**Office européen des brevets**

(19)

(11) **EP 0 921 393 A2**

## (12) EUROPÄISCHE PATENTANMELDUNG

(43) Veröffentlichungstag:
**09.06.1999 Patentblatt 1999/23**

(51) Int. Cl.⁶: $G01N\ 30/06$, $G01N\ 30/72$

(21) Anmeldenummer: 98120065.2

(22) Anmeldetag: 23.10.1998

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **06.12.1997 DE 19754161**

(71) Anmelder:
**GSF-Forschungszentrum für Umwelt und Gesundheit GmbH**
**85764 Neuherberg (DE)**

(72) Erfinder:
- **Zimmermann, Ralf Dr.**
  **80339 München (DE)**
- **Rohwer, Egmont Prof. Dr.**
  **Lynnrodene 0081 (ZA)**
- **Heger, Hans Jörg**
  **80807 München (DE)**
- **Boesl, Ullrich Dr.**
  **84036 Landshut (DE)**
- **Kettrup, Antonius Prof. Dr.**
  **59821 Arnsberg (DE)**

(54) **Verfahren zum Nachweis von Substanzen und Substanzklassen mittels REMPI-TOFMS**

(57) Die Erfindung betrifft ein Verfahren zum Nachweis von Substanzen oder Substanzklassen, wobei diese mit einer Detektoreinheit basierend auf dem Prinzip der resonanzverstärkten Mehrphotonenionisation nachgewiesen werden.

Aufgabe der Erfindung ist es, daß Verfahren so auszugestalten, daß die Nachweismöglichkeit bezüglich mehrerer Substanzen oder Substanzklassen erhöht wird.

Gelöst wird diese Aufgabe dadurch, daß die Substanzen oder Substanzklassen bevor sie der Detektoreinheit zugeführt werden, ganz oder teilweise chemisch verändert

Fig. 3

EP 0 921 393 A2

**Beschreibung**

Die Erfindung betrifft ein Verfahren zum Nachweis von Substanzen und Substanzklassen nach dem Oberbegriff des Patentanspruchs 1.

Als Reaktion auf die immer offensichtlicheren Umweltschäden werden von vielen Staaten gesetzliche Vorschriften und Verordnungen für die Emissions- und Immissionsüberwachung aufgestellt und in regelmäßigen Novellierungen dem aktuellen Kenntnisstand angepaßt. Die Analytik von Spurensübstanzen wie z. B. den polychlorierten Dioxinen und Euranen verlangt die Anwendung sehr kosten- und vor allem zeitaufwendige Probennahme- und Probenvorbereitungstechniken vor der eigentliche instrumentelle Analyse z. B. mit Gaschromatographie-Massenspektrometrie (GC-MS). Eine wichtige Zielsetzung auf dem Weg zu schnelleren und kostengünstigeren Spurenanalysen wäre eine Verringerung dieses Probenvorbereitungsaufwands, der vor der eigentlichen instrumentellen Analyse mit z.B. Gaschromatographie-Massenspektrometrie durchgeführt werden muß (häufig zeitaufwendige, naßchemische Vortrennungen). Um dieses erreichen zu können, ist die Entwicklung neuer instrumenteller analytischer Methoden mit erhöhter Selektivität und Nachweisempfindlichkeit nötig.

Eine sehr vielversprechende Methode für hochselektive und gleichzeitig schnelle organischen Spurenanalytik ist die resonanzverstärkte Lasermassenspektrometrie (REMPI-TOFMS [1]). Bei dieser Technik wird mit der resonanzverstärkten Mehrphotonenionisation (REMPI) eine speziesselektives Ionisationsverfahren mit der Massenspektrometrie gekoppelt. Die selektive Ionisation beruht auf der Existenz substanzspezifischer UV-Absorptionswellenlängen (vibronischer Fingerprint), die für eine selektierte Resonanzionisation aus komplexen Stoffgemischen ausgenutzt werden können. Zur Resonanzionisation wird die Laserwellenlänge auf eine Absorptionsbande des Zielmoleküls abgestimmt. Die Zielmoleküle können dann effizient Licht absorbieren, wobei sie in angeregte Zustände übergehen. Für andere Moleküle, die keine Absorptionsbande bei der eingestrahlten Wellenlänge aufweisen, bleibt die Lasereinstrahlung ohne Auswirkung. Verwendet man genügend intensives Laserlicht (mit gepulsten, abstimmbaren Lasern erhält man Leistungsdichten im $10^5$ -$10^9$ W/cm$^2$ Bereich), so können die angeregten Moleküle ihrerseits ein weiteres Photon absorbieren. Wenn die Summe der Energien der absorbierten Photonen über der Ionisationsenergie liegen, wird das Molekül ionisiert (d. h. es gibt ein Elektron ab). Die gebildeten Ionen werden in einem Flugzeitmassenspektrometer (engl.: time-of-flight mass spectrometer, TOFMS ) nachgewiesen.

Die resonanzverstärkte Lasermassenspektrometrie stellt somit eine zweidimensionale analytische Technik (wie auch GC-MS) mit den freien Parametern Laserwellenlänge (UV-Spektroskopie) und Molekülmasse (Massenspektrometrie) dar.

Die, für viele analytische Anforderungen vorteilhafte, hohe Selektivität der REMPI-TOFMS Methode schränkt allerdings auch die Universalität stark ein, d.h. bei einer gegebenen REMPI-Laserwellenlänge sind nur wenige Verbindungen nachweisbar. Daher sind praktische Anwendungen der REMPI-TOFMS Methode bisher vor allem für spezielle analytische Probleme wie z. B. höchst zeitaufgelöste Überwachung von Verbrennungsprozessen [2] durchgeführt worden.

Die konventionelle instrumentelle organische Spurenanalytik stützt sich zu einem erheblichen Teil auf zweidimensionale, gekoppelte Techniken, die oft eine chromatographische Trennung der Probenbestandteile (z. B. Gaschromatographie, GC oder *High Performance Liquid Chromatography*, HPLC) mit einer instrumentellen Detektionstechnik verbinden (z.B. Massenspektrometrie, MS). Als besonders vielseitig hat sich dabei die Kombination von Gaschromatographie und Massenspektrometrie (GC-MS) bewährt. Diese Technik wird in fast jedem analytischen Labor, das z. B. polyzyklische Aromaten und chlorierte Aromaten wie z.B. die polychlorierten Dibenzo-p-dioxine nachweist, angewandt. Viele Proben sind jedoch so komplex zusammengesetzt (komplexe Matrizes z.B. von Umweltproben, Lebensmittelproben etc.) so daß, um mögliche Interferenzen zu vermeiden, eine sehr zeit- und kostenaufwendige naßchemische Probenaufbereitung (z. B. durch Säulenchromatographie) durchgeführt werden muß.

Die analytischen Anforderungen bewegen sich heutzutage immer mehr in die Richtung von Schnellanalytik, im besonderen im Hinblick auf kontinuierliche *on-line* Überwachungsverfahren (z. B. für produktionsintegrierten Umweltschutz und Emissionsüberwachung). Um die Analysengeschwindigkeit zu erhöhen (d. h. den Probenaufbereitungsaufwand zu verringern) ist vor allem eine Erhöhung der instrumentellen Selektivität notwendig. Eine ältere Technik zur Beschleunigung der instrumentellen Analytik von chlorierten Verbindungen beruhte allerdings auf dem entgegengesetzten Prinzip. Bei der sogenannten Kohlenstoffgrundgerüst Technik wurde die Selektivität drastisch erniedrigt, man erhielt eine relativ unspezifische Information über Chloraromaten in der Probe [3]. Bei dieser Methode wurde im Injektorblock eines Gaschromatographen ein Katalysator, bestehend aus einem gepacktem Katalysatorbett (z. B. auf Kieselguhr bei 300° C) verwendet, der die Halogenaromaten zu ihren entsprechenden aromatischen oder zykloaliphatischen Grundgerüsten reduzierte. Der nachgeschaltete Flammenionisationsdetektor (FID) zeigte nach der niedrig aufgelösten gaschromatographischen Trennung, Chromatogramme, welche die Grundgerüst-Peaks, deren Intensität der Summe aller entsprechenden chlorierten Isomere entspricht, zeigen. Diese Methode führte, unter Verlust der Information über die Isomerenzusammensetzung, zu vereinfachten Chromatogrammen. Die Vereinfachung der Chromatogramme komplexer Umweltproben mit der Kohlenstoffgrundgerüst-Technik war allerdings nicht ausreichend, um die naßchemische Probenvorbereitung deutlich einzuschränken. Da die Chromatogramme schlecht aufgelöst und häufig stark überlagert waren und außerdem die Empfindlichkeit gegenüber konventionellen Methoden zum Chloraromaten-Nachweis über einen ECD-Detektor deutlich reduziert war hat sich diese Technik nicht durchgesetzt. Weiterhin fehlten geeignete Maßnahmen um auch schmutzige Proben einer instrumentellen Analyse zuzuführen ohne das Analysengerät nach kurzer Betriebszeit durch die Verschmutzung außer Betrieb zu setzen.

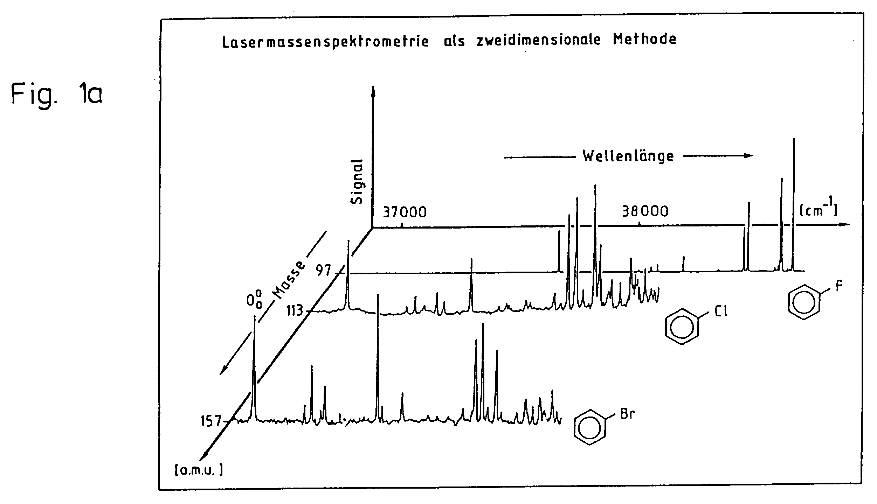

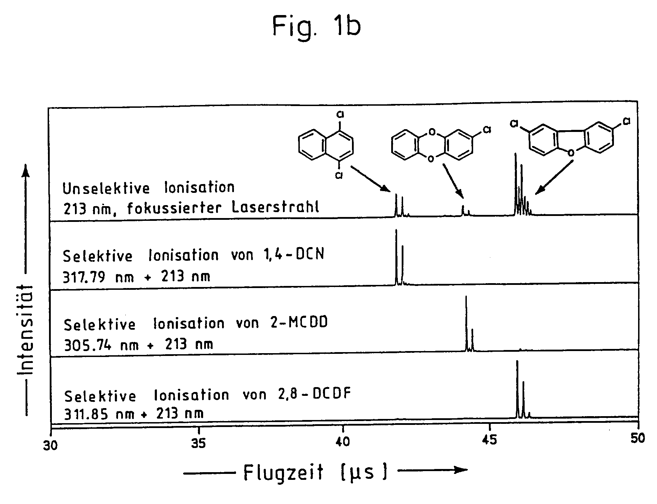

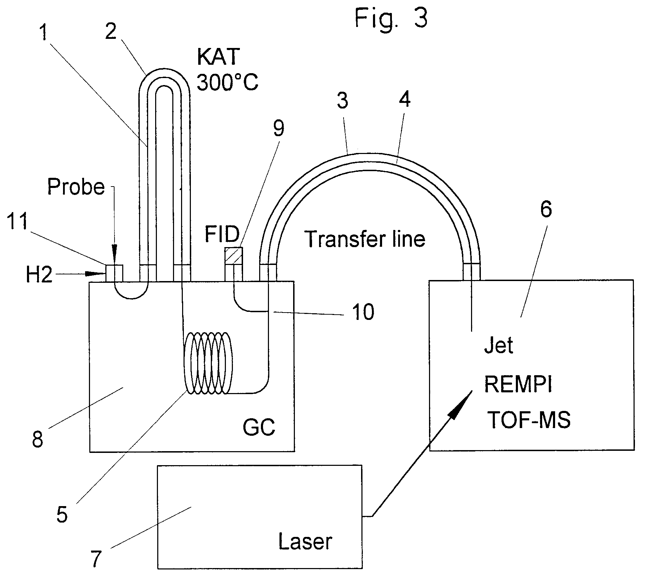

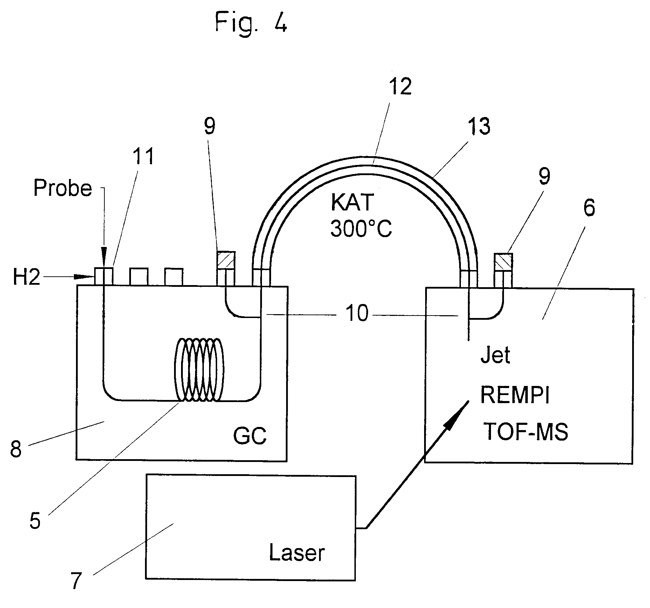

Kürzere Analysezeiten in der organischen Spurenanalytik erfordern, bei gleichbleibender oder verbesserter Genauigkeit und Empfindlichkeit, vor allem eine Erhöhung der Selektivität des instrumentellen Detektionsverfahrens, da sich so die naßchemische Probenaufbereitung einschränken oder sogar völlig übergehen läßt. Als in diesem Zusammenhang sehr aussichtsreich hat sich die hochempfindliche und -selektive Technik der resonanzverstärkten Lasermassenspektrometrie erwiesen. Die Ionen werden hierbei durch resonanzverstärkte Mehrphotonenionisation (REMPI) [1] erzeugt und mit einem Flugzeitmassenspektrometer (engl. *Time-of-Flight,* TOF) nachgewiesen (Fig. 1). Das Besondere an der REMPI-Ionisation ist die Einbindung der UV-Spektroskopie in den Ionisationsprozeß (siehe Fig. 1). Dieses erlaubt eine substanzselektive Ionisation einer gesuchten Verbindung aus einem komplexen Stoffgemisch über die Wahl einer geeigneten Laserwellenlänge. Die Kombination der Resonanzionisation mit einer massenspektrometrischen Detektion stellt daher eine hochselektive, zweidimensionale, analytische Technik dar [1]. Durch Verwendung eines sogenannten Jet-Einlaßsystems können die Analytmoleküle in der Gasphase kondensationsfrei auf Temperaturen von nur einigen Grad Kelvin abgekühlt werden. Unter diesen Bedingungen ist die Selektivität der REMPI-Ionisation noch weiter erhöht, sogar isomere Verbindungen können aufgrund ihrer unterschiedlich strukturierten Absorptionslinien diskriminiert werden (Fig. 3). Für viele Substanzklassen ist eine sehr hohe Nachweisempfindlichkeit möglich [1, 4], so daß beispielsweise on-line Messungen von Schadstoffen im ppb-Konzentrationsbereich möglich sind [5, 6]. Die Flugzeitmassenspektrometrie stellt dabei den idealen massenspektrometrischen Detektor für die Kombination mit der REMPI-Ionisation dar. Aufgrund dieser Eigenschaften kann die REMPI-TOF Technik sehr erfolgreich in bestimmten, diffizilen analytischen Fragestellungen eingesetzt werden. Eine typische Anwendung ist der schnelle Nachweis von Zielverbindungen aus einer sehr komplexen chemischen Matrix. Die REMPI-TOFMS Technik wird z. B. bereits zur hoch zeitaufgelösten Verbrennungsabgas-Analytik (d. h. eine Meßfrequenz von ca. 1 - 50 Hz für Schadstoffe wie Stickoxide, Aldehyde, Aromaten) angewandt (Fig. 4). Neuere interessante Ergebnisse sind im Bereich der Lebensmittelanalytik [5] und im Sektor der on-line Prozeßanalytik [6] gemacht worden. Die hohe Selektivität -und die damit verbundene geringe Universalität - (Fig. 3) ermöglicht zwar einerseits interessante Spezialanwendungen wie die oben genannte zeitaufgelöste Abgasanalytik, verhindert andererseits eine weitere kommerzielle Verbreitung dieser mit vielen Vorteilen behafteten Methode im analytischen Sektor.

Durch die im Rahmen dieses Patentantrages vorgestellten Erfindung kann der Einsatzbereich der Lasermassenspektrometrie mit einem speziellen katalytischen Reaktor deutlich erweitert werden.

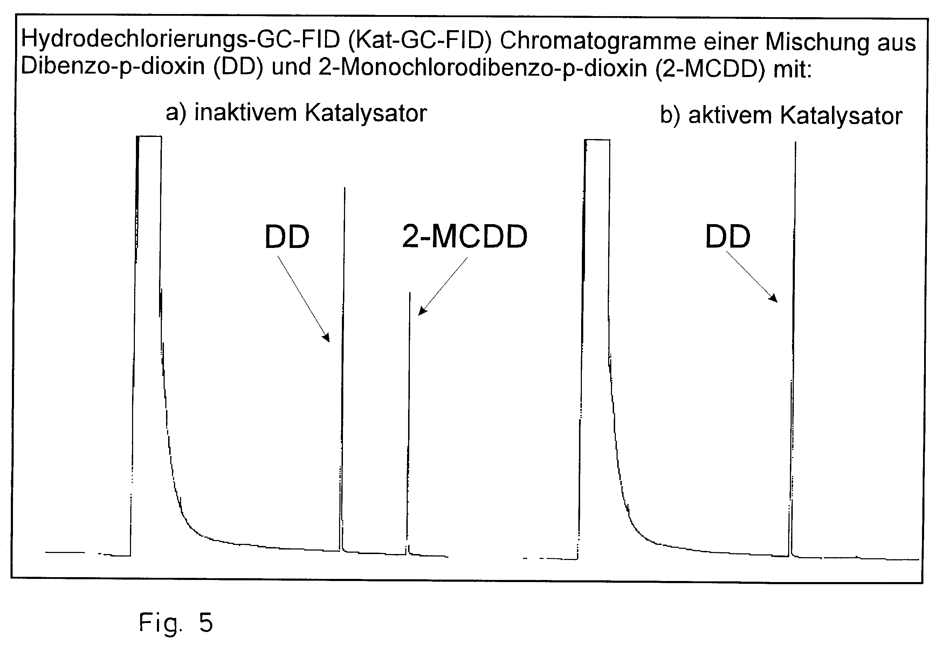

Die Kopplung der Jet-REMPI-TOFMS Technik mit der Gaschromatographie (GC) ergibt eine dreidimensionale analytische Methode mit den freien Parametern Laserwellenlänge, Molekülmasse und GC-Retentionszeit. Da sich die Entwicklungstrends in der instrumentellen Analytik in immer stärkerem Ausmaß auf gekoppelte Techniken stützen, sind bereits mehrere Versuche zur Kopplung von GC und Jet-REMPI-TOFMS in der Literatur dokumentiert [7]. Allerdings gelang es mit diesen bisher vorgestellten Kopplungen nicht sowohl die GC - Auflösung als auch die REMPI - spektroskopische Auflösung gleichzeitig mit einer hohen Empfindlichkeit zu erhalten. Erst vor kurzem wurde eine GC-Jet-REMPI-TOFMS Kopplung realisiert, die sowohl die Jet-REMPI als auch die gaschromatographischen Eigenschaften optimal kombiniert [4]. Das Kernstück dieser Kopplung besteht aus einem gepulsten Ventil, daß das von der GC Kapillare kontinuierlich abgegebene Gas 20 mal pro Sekunde in kurzen Pulsen in das Spektrometer einschließt (unter Ausbildung eines Überschallmolekularstrahls). Die Einkopplung der GC-Kapillare erfolgt unter konsequenter Vermeidung von Totvolumina (wichtig für gute GC Auflösung) direkt vor der, durch den Ventilstössel verschlossenen Expansionsdüse. Weiterhin wird nur das GC-Trägergas als Expansionsgas für den Überschallmolekularstrahl (Jet) verwendet. Die Fig. 5 zeigt einen schematischen Aufbau der GC-Jet-REMPI-TOFMS Kopplung. Rechts oben in der Fig. 5 sind zwei Chromatogramme der Ethylbenzol/Xylol-Gruppe aus einer Benzinprobe abgebildet. Das obere Chromatogramm wurde mit unselektiver Ionisation (laserinduzierter Elektronenstoß, LEI) das untere mit selektiver REMPI-Ionisation aufgenommen (1 = 272.325 nm, abgestimmt auf p-Xylol). Es ist zu erkennen, daß im letzteren Fall nur eine Verbindung ionisiert wird, da die Ionisaton des koeluierenden m-Xylols spektroskopisch ausgeschlossen werden kann (anhand der REMPI-Spektren der isomeren Xylole). Für Toluol wurde mit der GC-Jet-REMPI-TOFMS Kopplung eine Nachweisempfindlichkeit von 200 fg (~ 200 billiardstel Gramm) bei einem Signal-zu-Rauschen Verhältnis von 2:1 erreicht [4]. Aufgrund der hohen Selektivität ist der GC-Jet-REMPI-TOFMS Ansatz für eine Anwendung als Schnell-Spurenanalysensystem besonders geeignet, wenn nur eine oder einige wenige Zielsubstanzen überwacht werden sollen. Neben einer möglichen Reduzierung der GC-Auflösung Zugunsten einer deutlich erhöhten Analysengeschwindigkeit kann dabei vor allem der Probenvorbereitungsaufwand entscheidend verringert werden. Eine gegen Säulenverschmutzung nur kurz vorgereinigte Probe (siehe auch zu neuen GC-Einlaßtechniken für schmutzige Proben: [8] kann im Prinzip in einigen Minuten auf Zielverbindungen (z. B. prozeßspezifischen Indikatoren oder Umweltgifte wie z. B. Benzo[a]pyren [4]) untersucht werden. Ein bedeutender Nachteil der Methode ist wie oben bereits im Abschnitt Resonanzverstärkte Lasermassenspektrometrie (REMPI-TOF) angemerkt die geringe Universalität (d. h. es können nur wenige Komponenten, oft nur eine einzige bei einer bestimmtem Laserwellenlänge nachgewiesen werden). Die im Rahmen dieses Patentantrages beschriebene Erfindung erlaubt eine umfassende Ausweitung der Anwendungsmöglichkeiten der GC-Jet-REMPI-TOFMS Methode, da die Universalität spezifisch erhöht werden kann.

Aufgabe der Erfindung ist es ein Verfahren der e. g. Art so auszugestalten, daß die Nachweismöglichkeit bezüglich mehrerer Substanzen oder Substanzklassen erhöht wird.

Gelöst wird diese Aufgabe durch die Merkmaledes Patentanspruchs 1. Die Unteransprüche beschreiben vorteilhafte Ausgestaltungen der Erfindung.

Die Erfindung stellt eine neue spurenanalytische Technik zur Verfügung, die eine katalytische/chemische Reaktion in einem speziellen Reaktor zur in-line Probenvorbereitung für die resonanzverstärkte Mehrphotonenionisation-Massenspektrometrie (REMPI-TOFMS) verwendet. Eine umfassendere Verbreitung der höchst selektiven und empfindlichen REMPI-TOFMS Methode für kommerzielle analytische Anwendungen wird, wie bereits oben erwähnt, vor allem durch ihre geringe Universalität behindert (d. h. bei einer gegebenen Laserwellenlänge werden nur sehr wenige Verbindungen erfaßt). Die hier beschriebene Erfindung erlaubt, durch die Einbindung der katalytischen/chemischen Probenvorbereitung für REMPI-TOFMS, diesen Hinderungsgrund zu entschärfen. Die katalytische Probenvorbereitung wird eingesetzt um die chemischen Eigenschaften bestimmter Moleküle oder Molekülgruppen aus der spurenanalytisch zu untersuchenden Probe maßgeschneidert zu ändern, so daß diese optimal mit der Technik der resonanzverstärkten Mehrphotonenionisation (REMPI) ionisiert und anschließend in einem Flugzeitmassenspektrometer (TOFMS) nachgewiesen werden können. Dazu wurde ein spezieller chemischer Reaktor, basierend auf einer inwändig beschichteten Mikro-Kapillare wie sie für die Gaschromatographie eingesetzt wird (Durchmesser 0.001-5 mm), entwickelt. Der Reaktor kann unabhängig vom GC-Injektorblock oder dem GC-Ofen geheizt werden (Temperaturkontrolle). Dieses erlaubt beispielsweise bei einer Montage des Reaktors vor der Tennsäule eine chemische Probenvorbereitungsreaktion bei 350° wobei die Reaktionsprodukte auf der kalten Trennsäule (z. B. 30°) refokusiert (Kryofokussierung) werden. Im Gegensatz zur klassischen Kohlenstoffgrundgerüst-Technik kann somit eine hohe chromatographische Auflösung realisiert werden. Durch die additive Wirkung der zweidimensionalen REMPI-TOF Selektivität (Resonanzionisations- und Massenselektivität) und der chemischen Selektivität der katalytisch/chemischen Probenvorbereitung kann ein völlig neuartiger substanzklassenselektiver Detektor realisiert werden. Die Bedeutung dieser neuen Selektivität wird am Beispiel der Dioxinanalytik offensichtlich. Die Verwendung eines Hydrodechlorierungskatalysators (KAT) erlaubt die selektive Reduktion aller Chloraromaten zu ihren aromatischen Grundgerüsten (also alle PCDD, PCDF, PCB und PCBz zu unchloriertem Dibenzo-p-dioxin, Dibenzofuran, Biphenyl, Benzol). Werden nun die REMPI-TOFMS Parameter auf das unchlorierte Dibenzo-p-dioxin abgestimmt ($l_{REMPI}$= 296.16 nm, $m_{TOFMS}$ = 184 amu [9]) so erhält man einen KAT-REMPI-TOFMS Detektor (z. B. für die Gaschromatographie oder on-line Meßverfahren) der spezifisch auf halogenierte Dibenzo-p-dioxine anspricht. Gleiches ist auch für die Substanzklasse der Furane möglich. Es ist zur Zeit noch nicht klar, inwie weit bromierte oder gemischt halogenierte Verbindungen für einige Kongenere zu Überlagerungen führen.

Durch die Vorschaltung verschiedener, auf die jeweilige analytische Fragestellung angepaßter, in-line oder offline katalytisch-chemischer oder chemischer Probenvorbereitungsverfahren, kann die REMPI-TOFMS Methode (meistens in Kopplung mit einem Gaschromatographen: GC-REMPI-TOFMS) für eine Vielzahl von bedeutenden, spurenanalytischen Fragestellungen eingesetzt werden. Für eine Nutzbarmachung der Jet-REMPI-TOF Methode für die Analytik ist besonders wichtig, daß für viele spurenanalytische Fragestellungen (z. B. auch für die Dioxinanalytik) online Derivatisierungen gefunden werden können, die eine Anwendung der relativ einfachen und kostengünstigen Einfarben-REMPI Ionisation (Anregung und Ionisation erfolgt mit Photonen der gleichen Wellenlänge), die nur ein Laser notwendig macht, erlauben. Das neue Verfahren muß auch im Licht der Entwicklungen der Lasertechnik betrachtet werden. Neue abstimmbare Festkörperlaser (z. B. optische parametrische Oszillatoren und Titan-Saphir-Laser) die zur Zeit bereits kommerziell erhältlich sind, werden in naher Zukunft für Routineanwendungen ausreichend zuverlässig, einfach handhabar und preisgünstig sein.

Die Erfindung wird im folgenden anhand von Ausführungsbeispielen mit Hilfe der Figuren näher erläutert. Die Beschreibung der Figuren findet sich am Ende der Beschreibung.

Im folgenden werden beispielhaft einige prinzipiell mögliche Anwendungsbeispiele für den Einsatz von selektiven in-line oder off-line, katalytischen oder chemischen Probenvorbereitungsverfahren für einen Einsatz der REMPI-TOFMS-Technik in der Spurenanalytik angegeben und mit Hilfe der Figuren näher erläutert.

□  Substanzen die auf einem mit REMPI gut nachweisbarem Grundgerüst aufbauen wie z.B. die sübstituierte Aromaten, Olefine oder Heteroaromaten, können durch katalytisch induzierte Sübstituentenabspaltung oder anderer Reaktionen in ihre Grundgerüste überführt werden (z. B. Dealkylierueng, Dehalogenierung).

,  Verbindungen aus Substanzklassen, die auf einem nicht mit REMPI gut nachweisbarem Grundgerüst beruhen können durch chemische Derivatisierung/katalytische Reaktionen in Verbindungen überführt werden, die mit REMPI gut nachweisbar sind (z. B. Aromatisierung, Ankopplung von chromophoren, aromatischen Resten, Modifikation von Substituenten etc.).

f Maskieren von interferierenden Substanzen. Verbindungen die sehr effektiv mit REMPI nachweisbar sind (z.B. polyzyklische Aromaten) und die den Nachweis anderer Verbindungen mit schlechteren REMPI-Empfindlichkeiten (z.B. Carbonylverbindungen) z.B. durch Masseninterferenz oder Detektorsättigung stören, können durch chemische Derivatisierung/katalytische Reaktionen in REMPI-inaktive Verbindungen überführt werden.

Die Art der erzielbaren analytischen Information hängt entscheidend von der Positionierung des chemischen oder katalytischen Reaktors innerhalb des Gesamtsystems ab. Im folgenden werden beispielhaft die vier mögliche Aufbauten beschrieben:

a) Einbauposition des speziellen Katalysators/chemischen Reaktors in-line vor der Trennsäule (KAT-GC-REMPI-TOF)

Durch die Abbildung der gesamtem Isomeren-Mannigfaltigkeit auf das entsprechende aromatische Grundgerüst erhält man einen Summenparameter für das jeweilige Isomeren-Ensemble. Die REMPI-Ionisation (im Gegensatz zum FID/ECD) ist für unchlorierte Aromaten besonders effizient ist. Durch die eingeführte, hohe optische Selektivität der REMPI-Ionisation ein interferenzfreier Nachweis der jeweiligen Grundgerüste möglich. Dies kann den Probenvorbereitungsaufwand vermindern oder bei der Verwendung neuer Einlaßtechniken [8] vielleicht sogar völlig vermeiden und erlaubt somit eine Schnellanalytik z. B. der chlorierten Aromaten. Neuere Untersuchungen zeigen, daß das Verteilungsmuster der polychlorierten Dibenzo-p-dioxinen/furanen (PCDD/F) Isomere bzw. Homologe im Rauchgas von Müllverbrennungsanlagen (MVA) weitgehend konstant ist. Daher ergeben sich vielleicht Anwendungsmöglichkeiten der KAT-GC-REMPI-TOF Technik für eine Schnellüberwachung der Rauchgase von z.B. Müllverbrennungsanlagen auf PCDD/F Emissionen. Aus dem mit der KAT-GC-REMPI-TOF Technik schnell erzielbaren Summenwert aller Dioxin-Kongenere kann der relevante Wert in Internationalen Toxizitätsequivalenten wahrscheinlich zuverlässig abgeschätzt werden.

b) Einbauposition des Katalysators/chemischen Reaktors in-line nach der Trennsäule (GC-KAT-REMPI-TOF)

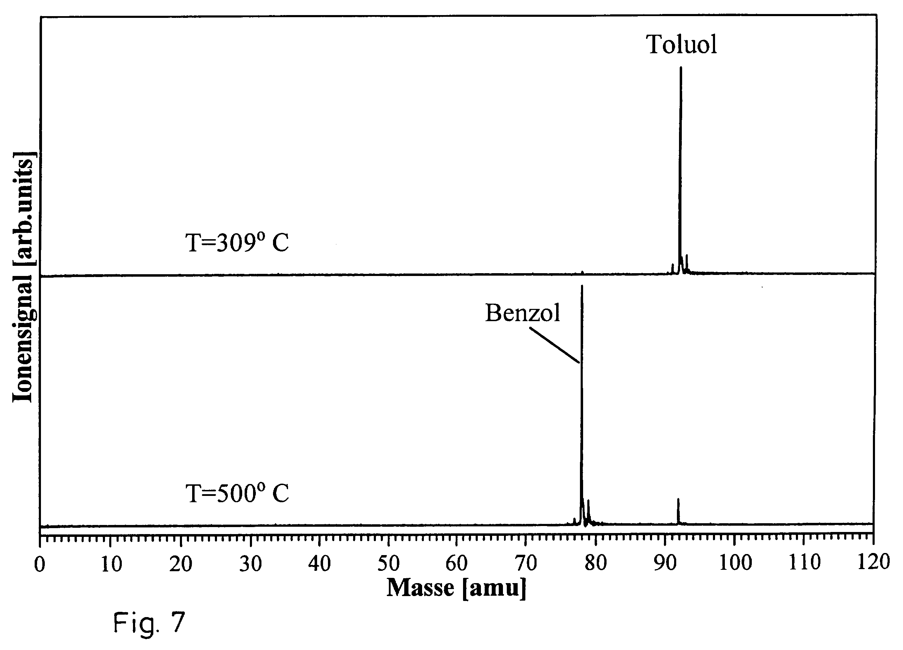

Bei der Einbauposition des Katalysators/Reaktors nach der chromatographischen Trennsäule (Aufbauschema: Fig. 7) werden die Verbindungen bevor sie den Katalysator erreichen gaschromatographisch (d.h. zeitlich) aufgetrennt. Die sukzessive am Katalysator ankommenden Substanzen werden im Katalysator umgesetzt und können anschließend im REMPI-TOF Detektor nachgewiesen werden. In dieser Anordnung bleibt die volle gaschromatographische Selektivität erhalten (d.h. die Retentionszeiten der Ursprungsverbindungen). Über die Gaschromatographie kann also prinzipiell ein Grad an chromatographischer Isomerenselektivität wie z. B. bei der konventionellen Dioxinanalytik erreicht wird. Es muß allerdings darauf hingewiesen werden, daß die massenspektrometrische Selektivität durch den Wegfall der Information über die Chlorsubstituentenanzahl abnimmt. Die Vorteile der Transformation sind folgende:

(1) alle Isomere können nach der katalytischen Umwandlung mit einer REMPI-Laserwellenlänge detektiert werden (Erhöhung der Universalität).

(2) extrem hohe Selektivität gegenüber den potentiellen chemischen Interferenzen der konventionellen GC-MS Analytik durch die selektive REMPI-Ionisation ermöglicht eine weitgehende Einschränkung der Probenvorbereitung

(3) sehr hohe Empfindlichkeit mit der einfachen Einfarben-REMPI-Technik z.B. für Dioxine, Furane und Biphenyle gleiche REMPI-Responsefaktoren für alle Isomere. Die unterschiedlichen Response-Faktore sind sonst bei REMPI-Nachweisen problematisch.

c) Verwendung einer off-line chemischen/katalytischen Probenvorbereitung mit anschließender GC-REMPI-TOFMS Detektion

In einigen Fällen ist eine on-line Derivatisierung nicht möglich bzw. nicht erwünscht. Eine weite Palette an katalytischen oder chemischen off-line Derivatisierungsmethoden steht für diesen Fall zur Verfügung. Für spezielle analytische Nachweise können hier auch Elemente der klassischen clean-up Technik integrierte werden. Anwendungen sind z.B. im Bereich der forensischen Analytik (z.B. Drogennachweise, Sprengstoffspuren, Brandbeschleuniger), der Lebensmittelanalytik (Prozeßkontrolle, Aromastoffe ) möglich.

d) Verwendung der katalytischen/chemischen Probenvorbereitung on-line oder off-line für die REMPI-TOFMS-Technik ohne Verwendung einer GC-Trennsäule

Eine Verwendung der Katalysator Technik für REMPI-TOFMS ist auch ohne gaschromatographische Trennungen, beispielsweise für *on-line, real-time* Applikationen anwendbar. Dabei sind prinzipiell drei Ansätze möglich:

□ Kontinuierlicher Einlaß über in-line Katalysator/chemischen Reaktor. Dieses Verfahren erlaubt einen Einsatz für on-line analytischer Aufgaben (z. B. integrative Analytik komplexer Isomerenensembles möglich)

, Diskontinuierlicher Einlaß (z. B. nach Probenanreicherung (trapping) und Thermodesorption) unter Verwendung eines in-line Katalysators/chemischen Reaktors (z. B. wie unter□ aber durch die Probenanreicherung höhere Empfindlichkeiten erreichbar.

ƒ Diskontinuierlicher Einlaß (z.B. nach Probenanreicherung) unter Verwendung einer off-line katalytischen/chemischen Derivatisierung. Hierbei ist des ganze Arsenal der klassischen Derivaterisierungsreaktionen für die Gaschromatographie einsetzbar.

Ausführungsbeispiel:

Einsatz der Hydrodechlorierungsreaktion zum Nachweis chloraromatischer Verbindungen

Im folgenden wird die Erfindung am Beispiel der Analyse komplexer chloraromatischer Isomerenmischungen mit der Gaschromatographie-REMPI-TOF Methode erläutert. Das Verfahren könnte in bedeutenden umweltanalytischen Gebieten wie z. B. der Analytik von polychlorierten Benzolen (PCBz), polychlorierten Naphthaline (PCN), polychlorierten Dibenzodioxinen (PCDD), polychlorierten Dibenzofuranen (PCDF) und polychlorierten Biphenylen (PCB) eingesetzt werden. Diese Verbindungen zeichnen sich dadurch aus, daß sie in Umweltproben in einer großen Anzahl verschiedener Kongnere (Homologe und Stellungsisomere) vorkommen. Gleichzeitig variiert die Toxizität einzelner Isomere um viele Größenordnungen. Daher ist die Verwendung einer isomerenselektiven analytischen Methodik zum Nachweis dieser Stoffe aus Umweltproben von außerordentlicher Bedeutung. Wie bereits oben erwähnt, ist die Anwendung der Gaschromatographie-Massenspektrometrie (GC-MS) Stand der Technik für isomerenselektive Spurennachweise. Dieses Verfahren erfordert allerdings aufgrund der, für hochkomplexe Proben nicht ausreichenden Selektivität der GC-MS Methode eine naßchemische Vortrennung. Eine Beschleunigung z. B. der isomerenselektiven Analyse von Dioxinen und vergleichbarer Verbindungen kann vor allem durch die Reduktion dieser sehr zeit- und kostenaufwendigen Probenvorbereitung erreicht werden.

Eine Steigerung der Selektivität der instrumentellen Analyse ist in diesem Zusammenhang besonders wichtig. Eine Möglichkeit zur Selektivitätssteigerung ist die bereits oben erwähnte Anwendung eines REMPI-TOF Lasermassenspektrometers als Detektor für die Gaschromatographie. Allerdings ist die Selektivität dieser dreidimensionalen Methode so groß, daß bei einer feststehenden Laserwellenlänge oft nur einige wenige Verbindungen aus einem hochkomplexen Gemisch nachgewiesen werden kann.

Durch Verwendung des chemischen Reaktors (hier: Hydrodechlorierungskatalysator: kann die Einzelsubstanzselektivität der GC-REMPI-TOF Technik (z. B. selektiver Nachweis eines PCDD-Isomers, siehe Fig.en $2_{unten}$ und 3) in eine Substanzklassenselektivität transformiert werden (z. B. Nachweis aller PCDD-Isomere). Bei dem verwendeten Hydrodechlorierungskatalysator handelt es sich um eine auf der Innenseite mit z. B. Palladium belegte und auf 250 - 300 °C geheizte Kapillare (0,36 mm Außendurchmesser) von etwa 1 m Länge, die entweder vor der Kapillartrennsäule d.h. direkt nach dem GC-Injektor) oder nach der Kapillartrennsäule über kommerzielle GC-Kapillarsäulenverbinder angebracht ist. Der Gaschromatograph wird mit Wasserstoff als Trägergas betrieben. Wenn die chloraromatischen Moleküle aus der injizierten Probe im Wasserstoffträgergas in den Katalysator gelangen, läuft die Hydrodechlorierungsreaktion ab.

$$Cl_nAromat + \tfrac{1}{2}\,n\,H_2 \xrightarrow{\text{H2, Palladium, 300 °C}} Aromat + n\,HCL$$

Dabei werden alle chloraromatischen Verbindungen aus der Probe in ihre entsprechenden aromatischen Grundgerüste transformiert, also in unserem Beispiel alle chlorierten Dibenzo-p-dioxine zum Dibenzo-p-dioxin Grundgerüst. Diese Reaktion verläuft unter geeigneten Bedingungen quantitativ ab. Der Laser kann nun auf eine Wellenlänge, welche die Ionisation des Grundgerüstes von Interesse erlaubt (z. B. Dibenzo-p-dioxin), eingestellt werden. Die hohe Selektivität der REMPI Ionisation gegenüber chemisch anderen Verbindungen bleibt bestehen.

Besonders zu beachten ist die Tatsache, daß die aromatischen Grundgerüste der - vom umweltanalytischen Standpunkt aus gesehen - besonders wichtigen Substanzklassen der polychlorierten Dibenzo-p-dioxine (PCDD), polychlorierten Dibenzofurane (PCDF), polychlorierten Biphenyle PCB), polychlorierten Naphthaline (PCN), polychlorierten Phenole (PCPh) und der polychlorierten Benzole (PCBz) allesamt im vorteilhaften Einfarben-REMPI-Prozeß unter Verwendung nur eines Lasers nachgewiesen werden können.

Tabelle 1

| Umweltrelevante chlorierte Verbindungsklassen die durch die Hydrodechlorierungs-Reaktion in ihr Grundgerüst umgewandelt werden können. Alle Grundgerüste sind mit dem für kommerzielle Anwendungen der Technik vorteilhaften, einfachen Einfarben-REMPI-Prozeß nachweisbar (nur ein Laser wird benötigt) | | | |
|---|---|---|---|
| Verbindungsklasse | Hydrodechlorierungsprodukt | Einfarben-REMPI Resonanzwellenlänge | Einfarben-REMPI Nachweisgrenzen für das Grundgerüst |
| polychlorierte Dibenzo-p-dioxine, PCDD | Dibenzo-p-dioxin | 296.16 nm [9] | - |
| polychlorierte Dibenzofurane, PCDF | Dibenzo-furane | 297.29 nm [9] | - |
| polychlorierte Naphthaline, PCN | Naphthalin | ....... | GC-REMPI-TOF: 200 fg [10], Jet-REMPI-TOF: 5 ppt [12] |
| polychlorierte Biphenyle, PCB | Biphenyl | 274,57 nm [11] | - |
| polychlorierte Phenole, PCPh | Phenol | ............ . | Jet-REMPI-TOF: 60 ppt [13] |
| polychlorierte Toluole, PCT | Toluol | 260,21 nm [4] | GC-Jet-REMPI-TOF: 200 fg [4] Jet-REMPI-TOF: 50 ppt [12] |
| polychlorierte Benzole, PCBz | Benzol | 259,11 nm [4] | Jet-REMPI-TOF: 90 ppt [13] |

Je nachdem, in welcher Position (d. h. vor oder nach der Kapillartrennsäule) der Katalysator eingebaut ist, erhält man wie unter 4b) und 4c erläutert unterschiedliche Ergebnisse:

⇒    Bei einer Einbauposition des Hydrodechlorierungskatalysators vor der Trennsäule (KAT-GC-REMPI-TOF) erhält man einen Summenwert über alle polychlorierte Dibenzo-p-dioxine bei der Retentionszeit des unchlorierten Dibenzo-p-dioxins (siehe Nebenanspruch 5.2a)

⇒    Bei einer Einbauposition des Hydrodechlorierungskatalysators nach der Trennsäule (GC-KAT-REMPI-TOF) bleiben die Retentionszeiten der (ehemals chlorierten) Isomere erhalten und ermöglichen daher eine Isomerenbestimmung. Die hohe optische REMPI-Selektivität auf Dioxin bleibt gegenüber allen anderen Verbindungen erhalten. Weiterhin ist die massenspektrometrische Selektivität durch den Wegfall der Chlor-Isotopenpattern erhöht. Das GC-KAT-REMPI-TOF Verfahren erlaubt daher eine deutliche Reduktion des clean up-Aufwands (siehe auch [8])

⇒    Bei einer on-line Meßanordnung ohne GC-Trennsäule könnte der kontinuierlich aufzeichenbare Summenwert über alle polychlorierten Dibenzo-p-dioxine eventuell als Indikatorparameter für die Toxizität der Dioxinemission z.B. eines Müllverbrennungskraftwerkes angewandt werden.

Aufgrund der hohen Bedeutung der Chloraromatenanalytik (z.B. Dioxinanalytik) haben wir die Hydrodechlorierungskatalyse zum substanzklassenselektiven Nachweis chlorierter Aromaten als Anwendungsbeispiel gewählt. Als Hydrodechlorierungskatalysator haben wir allerdings kein gepacktes Bett aus z.B. Palladium auf Chromosorb verwendet, sondern eine eigens von uns angefertigte, belegte Kapillarsäule.

Herstellung des Hydrodechlorierungskatalysators: Eine etwa 1 m lange, unbelegte (0.35 mm id.) Kapillare wird mit einer Lösung von 0.5% Palladiumacetonylacetat in Methylenchlorid gefüllt und an der einem Ende mit Klebstoff versiegelt. Von der offenen Seite wird dann mittels eine Vakuumpumpe evakuiert. Das Lösungsmittel dampft dabei unter Deponierung der Organopalladiumverbindung an der Innenwand der Kapillare ab. Dieses entspricht dem normalen Verfahren zur statischen Belegung von stationären Phasen der Kapillartennsäulen für die GC-Technik. Die so vorbereitete Kapillare wird bei 200°C mit Wasserstoff durchspült. Als Folge der Reduktion der Organopalladiumverbindung scheidet sich auf der Kapillarinnenwand metallisches Palladium ab. Der Katalysator wurde über einen Kapillarsäulenverbinder an die analytische Trennsäule gekoppelt. Der Katalysator wird in einer seperaten Heizeinheit konstant auf der Betriebstemperatur (hier: 250-325 °C) gehalten.

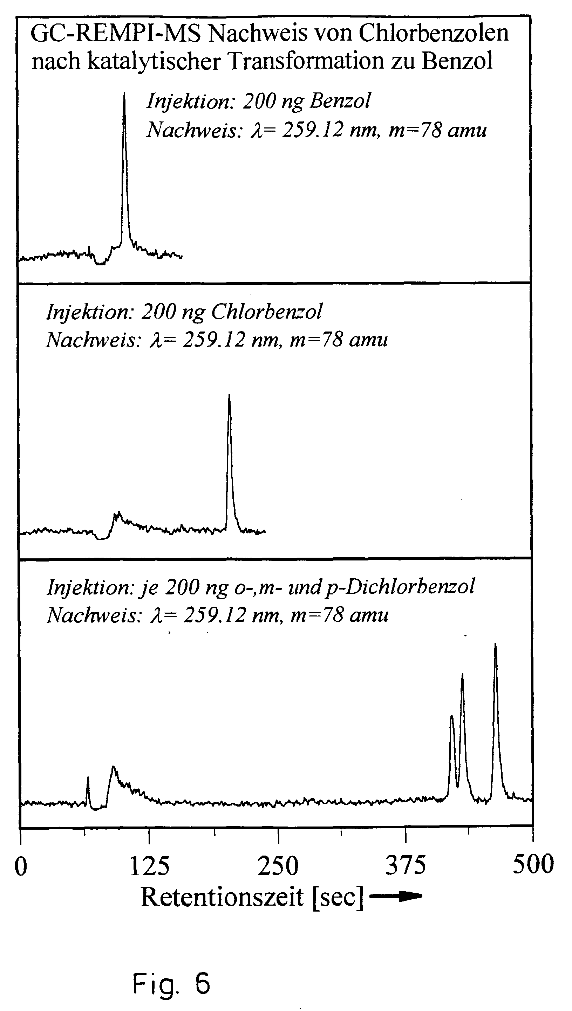

Kat-GC-FID Aufbau: Beim Aufbau ohne Kopplung an das Lasermassenspektrometer ist der Katalysator der Kapillarsäule vorgeschaltet (Fig. 6). Dies wurde wie folgt realisiert: Eine etwa 50 cm lange, unbelegte Kapillarsäule (0.35 mm id.) führt vom Injektorport eines Gaschromatographen durch eine heizbare Durchführung (hier: demontierter ECD-Detektorport) in eine außerhalb des GC angebrachten Heizeinheit unter direktem thermischen Kontakt zur heizbaren Durchführung. Innerhalb der Heizeinheit (hier: Heizschlauch) ist der etwa 1 m lange Hydrodechlorierungskatalysator über eine Kapillarsäulenverbindung angeschlossen. Das andere Ende des Hydrodechlorierungskatalysators ist mit einer 30 m langen gaschromatographischen Trennsäule (DB-1) verschraubt. Die Rückführung in den GC erfolgt über einen zweiten, heizbaren Injektorport am GC. Dieser zweite Injektorport steht ebenfalls in thermischem Kontakt zum Heizschlauch. Die Kapillarsäule mündet in den FID Detektor.

GC-KAT-Jet-REMPI-TOFMS Aufbau: Beim diesem Aufbau ist die Kapillarsäule dem Katalysator vorgeschaltet (Fig. 7). Dies wurde wie folgt realisiert: Die Kapillartrennsäule ist am Injektorport des Gaschromatographen angeschlossen. Das Ende der Kapillarsäule führt durch eine heizbare Durchführung (demontierter ECD-Detektorport) in die außerhalb des GC angebrachten Heizeinheit unter direktem thermischen Kontakt zur heizbaren Durchführung. Innerhalb der Heizeinheit liegt der etwa 1 m lange Hydrodechlorierungskatalysator der über eine Kapillarsäulenverbindung an die Kapillartrennsäule angeschlossen ist. Der Heizschlauch dient neben der Temperierung des Katalysators gleichzeitig als beheizte Tranfer-Line zum Lasermassenspektrometer. Am Ende der Hydrodechlorierungskatalysator-Kapillare ist etwa 50 cm lange, unbelegte Kapillarsäule (0.35 mm id.) angekoppelt, die durch eine heizbare Vakuumdurchführung zum Jet-Einlaßventil des Lasermassenspektrometers führt. Bei dem hier realisierten Aufbau werden isomere Verbindungen zuerst in der Trennsäule aufgetrennt und anschließend zu ihren aromatischen Grundgerüsten reduziert. Dies erlaubt eine Realisierung der neuartigen Substanzklassenselektivität für GC-REMPI-TOFMS. In der Fig. 9 ist eine Anwendung dieses Aufbaus für den substanzklassenselektiven Nachweis von chlorierten Benzolen dargestellt. Dazu wurden die Parameter des Lasermassenspektrometers auf Benzol eingestellt (259,11 nm, Registrierung auf m = 78 amu). Nach der Injektion durchlaufen die Verbindungen die Trennsäule und erreichen nach ihrer spezifischen Retentionszeit den Katalysator. Alle Chloraromaten werden zu ihren Grundgerüsten hydrodechloriert, d.h. alle auch enthaltenen Chlorbenzolderivate werden zu Benzol transformiert. Durch die hohe Selektivität der Jet-REMPI-TOFMS Methode kann bei den obigen Einstellungen nur Benzol nachgewiesen werden, mögliche isobare Interferentien sind durch Wellenlängenselektivität unterdrückt. Die Fig. 9 zeigt drei GC-KAT-REMPI-TOF Chromatogramme. Von oben nach unten wurden je 200 ng Benzol (oberste Spur), Monochlorbenzol (mittlere Spur) und die drei isomeren Dichlorbenzole (untere Spur) injiziert. Durch die katalytische Probenvorbereitung können alle Chlorbenzole auf der Masse und der Resonanzionisationswellenlänge des Benzols nachgewiesen werden.

Die prinzipiellen Vorteile der lasermassenspektrometrischen Methode (Empfindlichkeit, Selektivität) für spurenanalytische Routineanwendungen konnten bisher nicht ausgenutzt werden, da:

* jede Verbindung spezifische Nachweisparameter hat (Laserwellenlänge, ein- oder Zweifarbenprozeß, Laserleistung)

* Das schnelle Abstimmen dieser Parameter nicht möglich ist (daher können mit GC-REMPI-TOF nur wenige Verbindungen pro GC-Lauf nachgewiesen werden)

* Die Nachweisparameter viele Verbindungen nicht bekannt sind (und für hochtoxische Verbindungen auch nur sehr schwer ermittelt werden können)

* Die Responsefaktoren sogar für Isomere oft sehr unterschiedlich sind.

* Unselektive Mehrphotonenionisations-Verfahren ähnliche Nachteile wie die konventionelle Elektronenstoßionisation haben.

Um die Problematik der Lasermassenspektrometrie-Analytik in den Griff zu bekommen wurden diverse Versuche unternommen um die Selektivität durch physikalische Methoden zu variieren (z.B. durch effusiven Einlaß bei erhöhter Temperatur, partiell selektive Ionisation durch REMPI-Prozesse über höher angeregte Zustände, oder Einphotonenionisation mit 118 nm Laserlicht). Im Rahmen des erfindungsgemäßen Verfahrens wird dieser Weg verlassen und eine chemische Modifikation der Probe durchgeführt. Die Möglichkeiten des neuen Verfahrens sind im folgenden dargelegt:

* Erhöhung der REMPI-TOF Nachweisstärke für Substanzen, die ohne katalytische oder chemische Probenvorbereitung nicht oder nur mit schlechter Nachweisstärke nachgewiesen werden können (z.B. für hochchlorierte Aromaten, Nitroverbindungen, Aldhyde und Ketone)

* Spezifische Überführung von Probenbestandteilen, welche nur in einem aufwendigen Zweifarben-REMPI Experiment nachgewiesen werden können, in Derivate die mit dem wesentlich einfacheren Einfarben-REMPI Experiment detektierbar sind (viel besser geeignet für einen kommerziellen Einsatz).

* Gezielte Modifikation der extrem hohen Selektivität der REMPI-TOF Methode (ohne katalytische und oder chemische Probenvorbereitung: Isomerenselektiv!) so daR z.B. eine Substanzklassenselektivität (z.B. eine Selektivität für chlorierte Dibenzo-p-dioxin Isomere) möglich ist. Wichtig ist hierbei, daß die REMPI-Selektivität gegen andere chemische Bestandteile vollständig erhalten bleibt.

* Möglichkeit schnell Summenparameter für Verbindungsklassen zu erzielen, z. B. Summe aller chlorierten Dibenzo-p-dioxine oder Summe aller Aldehyde und Ketone in einer Probe. Dies ist von besonderer Bedeutung für z.B. Entwicklung schneller Screening-Techniken oder on-line Meßverfahren.

*  Erzielung gleicher Responsefaktoren für isomere Verbindungen, da nach der Transformation als chemisch identisches Grundgerüst vorliegen

Im folgenden werden beispielhafte ausgearbeitete analytische Konzepteangegeben.

Spurennachweis von alkylierten Aromaten:
Alkylierte Aromaten können katalytisch dealkyliert werden. Dies ist für einer Reihe von analytischen Anwendungen sowohl für einen Summennachweis (Kat-GC-REMPI-TOF) als auch für einen substanzklassenselektiven Nachweis (GC-Kat-REMPI-TOF) interessant. Der Nachweis von alkylierte polyzyklischen Aromaten aus Umweltproben ist eine wichtige Aufgabenstellung; einige der stärksten bekannten Kanzerogene gehören zu den alkylierten polyzyklischen Aromaten wie z.B. alkylierte Benzo[a]pyrene oder alkylierte Crysene. Durch Anwendung katalytischer Dealkylierung könnten z.B. alkylierte Benzo[a]pyrene oder alkylierte Crysene als das entsprechende Benzo[a]pyren- oder Crysen-Grundgerüst nachgewiesen werden. Die Fig. 10 (nach [10]) zeigt REMPI-TOF Massenspektren von Toluol (effusiver Direkteinlaß Wasserstoffgas als Trägergas und unter Vorschaltung eines Dealkylierungskatalysators, hier: gewöhnlicher Autokatalysator) bei zwei verschiedenen Dealkylierungkatalysator Betriebsbedingungen. Bei 309 °C findet praktisch keine Umsetzung statt (oben), man sieht den Toluolpeak (m = 92 amu) im Massenspektrum wie bei einem Aufbau ohne Katalysator. Bei einer Betriebstemperatur des Dealkylierungkatalysators von 500°C wird Toluol zu einem sehr großen Anteil zu Benzol dealkyliert, man sieht vor allem den Benzolpeak (m = 78 amu) im Massenspektrum. Der hochselekive Nachweis von PAH und anderen Aromaten ist in der Literaturstelle [4] beschrieben.

Nachweis von Analyten die keine sehr guten REMPI-Ionisationseigenschaften aufweisen:
Aldehyde und Ketone.

Der Nachweis von aliphatischen Aldehyden und Ketonen ist mit der REMPI-TOF Technik schwierig (ungünstige Lage der Zwischenzustände, schnelle Deaktivierung im Zwischenzustand etc.). Allerdings ist ein Nachweis dieser Verbindungen auch mit herkömmlichen Methoden besonders problematisch. Eine Standardtechnik für den Aldhydnachweis mit konventioneller GC oder HPLC nutzt, daß Alde-Aldehyde und Ketone mit geeigneten aromatische Reagenzien stabile GC-gängige Derivate (z.B. Phenylhydrazin, DNPH die entsprechenden Hydrazonderivate bilden (Fig. 11$_A$). Die Anwendung dieser Derivationsmethode läßt sich hervorragend mit einem GC-KAT-REMPI-TOF Ansatz verbinden. Nach der GC-Trennung setzt man einen Hydrierungskatalysator ein, der die Hydrazon-derivate zu den entsprechenden Hydrazinderivaten reduziert (gleichzeitig werden auch die Nitrogruppen am 2,3-Dinitrophenylrest hydriert. Da durch die Reduktion der aromatische Kern (jetzt 2,3-Aminophenylrest) von den zur Carbonylverbindung gehörenden Resten elektronisch entkoppelt ist, können die reduzierten Derivate auf einer Resonanzwellenlänge (vom 2,4-Aminophenylrest) nachgewiesen werden (Fig. 11$_{B1}$). Dabei bleibt die volle Selektivität der REMPI-TOF Methode gegenüber anderen Molekülen bestehen. Besonders vorteilhaft für den selektiven Nachweis der DNHP-Derivate ist die Tatsache, daß Aminobenzole und Polyaminobenzole besonders niedrige Ionisationspotentiale (z.B. Anilin: 7.7 eV gegenüber Benzol 9.24 eV) sowie stark rotverschobene pp*-Absorptionsbanden aufweisen. Alternativ kann auch eine hydrolytische Reduktion angewandt werden (Fig. 11$_{B2}$). Aus den Carbonyl-DNHP Derivaten wird dann 1,2,4-Triaminobenzol freigesetzt, welches als Indikator für die jeweilige Carbonylverbindung fungiert und selektiv mit REMPI-TOF detektiert werden kann. Die Identifikation erfolgt über die GC-Retentionszeit (Masseninformation geht verloren). Wenn nur ein bestimmtes ausgewähltes Aldehyd nachgewiesen werden soll, kann auf den katalytischen Reduktionsschritt verzichtet werden (Verwendung eines alternativen, nitrogruppenfreien Derivatisierungsreagenz es ist dann vorteilhaft).

Verwendung katalytischer oder chemischer Reaktion um Bestandteile einer spurenanalytisch zu untersuchenden Probe, welche den REMPI-TOFMS Nachweis einer anderen Substanz/Substanzklasse beeinträchtigen, in Derivate zu überführen, die nicht mit REMPI-TOFMS nachweisbar sind.

Um Interferenzen beim REMPI-TOFMS Nachweis von Substanzen mit mittelmäßigen REMPI-spektroskopischen Eigenschaften zu verhindern, kann es nötig sein Substanzen die eine sehr hohe REMPI Effizienz bei der benötigten Nachweiswellenänge haben (wie z.B. viele Aromaten im Bereich 240-270 nm) zu maskiereren, d.h. ihre REMPI Effizienz künstlich zu vermindern. Bei Aromaten kann dieses z.B. durch eine Hydrierung der aromatischen Grundgerüstes erfolgen. Dabei kann der gleiche Katalysator wie bei der Hydrodechlorierung der Chloraromaten eingesetzt werden (siehe :Beschreibung des GC-KAT-REMPI-TOF Ausführungsbeispiels). Für einen Nachweis von Carbonylverbindungen (Aldehyde/Ketone) sieht das analytische Schema wie folgt aus. Zuerst werden die Aldehyde/Ketone in einem off-line Derivatisierungsschritt chemisch geschützt (z.B. Überführung der Aldehyde/Ketone in ihre entsprechenden Ketale/Acetale). Im zweiten Schritt werden dann die Aromaten und Olefine in einem off-line Derivatisierungsschritt zu Zykloalkanen /Alkanen reduzieren (katalytisch oder chemisch hydrieren). Anschließend werden die Aldehyde und Ketone in einem off-line Derivatisierungsschritt entschützt (d.h. die Ketale/Acetae werden wieder zu den korrespondierenden Aldehyden und Ketonen). Die Probe ist nun frei von möglichen, REMPI-interferierenden Chromophoren. Schließlich werden die Aldehyde/Ketone über REMPI/TOFMS (Zweifarben-REMPI oder 1+2 oder 1+3 REMPI) nachgewiesen.

Chemische Modifikation unter Erhalt der Isomerenselektivität. Eine chemische Modifikation unter Erhalt der Isomereninformation ist immer dann sinnvoll wenn die ursprünglichen Verbindungen ungünstige Eigenschaften für einen REMPI-Nachweis aufweisen uns einen spektroskopische Isomerenbestimmung gewünscht oder notwendig ist:

Als weiteres Anwendungsbeispiel wird die selektive Deuterierung von Halogenaromaten angegeben.

Durch Verwendung von Deuterium als Trägergas für die katalytische Hydrodechlorierungstechnik („Deuterodechlorierungstechnik") kann unter bestimmten Bedingungen eine selektive Deuterierung erreicht werden. Durch Auswahl geeigneter Katalysatoren und Reaktionsbedingungen (in-line oder off-line) erhält man bei der „Deuterodehalogenierung" die dem halogenierten Ausgangsprodukt entsprechenden selektiv deuterierten Grundgerüste.

Beispiele:

$$1,4\text{-Dichlorbenzol} \rightarrow 1,4\text{ -Dideuterobenzol}$$

$$2,3,4,7,8\text{-Pentachlarodibenzofuran} \rightarrow 2,3,4,7,8\text{-Pentadeinterodibenzofuran}$$

$$2,3,7,8\text{-Tetrachlorodibenzo-p-dioxin} \rightarrow 2,3,7,8\text{-Tetradeinterodibenzo-p-dioxin}$$

Deuterierte Verbindungen können ebenso wie andere Isomere über die REMPI-Technik isomerenselektiv ionisiert werden. Im Gegensatz zu z. B. chlorierten Verbindungen sind deuterierte Aromaten mit der gleichen, hervorragenden Empfindlichkeit wie die nicht deuterierten Grundgerüste nachweisbar. Weiterhin sind viele Grundgerüste über den vorteilhaften Einfarben-REMPI Prozeß ionisierbar. Dieser Ansatz ist sinnvoll um eine oder wenige Zielverbindungen selektiv aus einer großen Anzahl isomerer Verbindungen nachzuweisen. Im Fall der Dioxinanalytik käme ein Nachweis von 2,3,7,8-Tetradeuterodibenzodioxin (gebildet aus dem Isomer mit der höchsten toxikologische Bedeutung, dem 2,3,7,8-Tetrachlorodibenzodioxin) oder von 2,3,4,7,8-Pentadeuterodibenzofuran (gebildet aus dem 2,3,4,7,8-Pentachlorodibenzofuran) in Frage. Das 2,3,4,7,8-Pentachlorodibenzofuran kommt in relativ hohen Konzentrationen in MVA Rauchgasen vor (etwa 1/3 der Gesamttoxizität in I-TE ) und stellt eine Leitverbindung für die Gesamtbelastung mit PCDD/F (in I-TE) dar [15].

Anwendungsbeispiel: Reduktion von Nitroaromaten zu entsprechenden Aminoaromaten.

Bei den Nitroaromaten handelt es sich um hochtoxische Verbindungen von außerordentlicher analytischer Relevanz. Neben dem Nachweis von Nitro-PAHs ist vor allem die Detektion von Nitroaromaten aus Rüstungsaltlasten oder Sprengstoffspuren wichtig (z.B. Trinitrotoluol, TNT und dessen Abbauprodukte). Nitroaromaten können mit der REMPI-TOF Methode allerdings nur unter sehr großen Schwierigkeiten nachgewiesen werden, da diese bereits im elektronisch angeregten Zwischenzustand dissoziieren (NO-Abspaltung) [11]. Durch Anwendung eines Katalysators können bei erhöhter Temperatur die Nitrogruppen selektiv reduziert werden, man erhält den entsprechenden Aminoaromaten (z.B. Triaminotoluol aus Trinitritoluol). Aminoaromaten können sehr effizient und selektiv mit der REMPI-Technik ionisiert werden (z.B. weist Anilin sogar eine deutlich höhere REMPI-Effizienz als Benzol auf).

Tabelle 2

| Bisher beispielsweise ausgearbeitete chemisch/katalytische Reaktionen um Eigenschaften von Probenbestandteilen für einen REMPI-TOF Nachweis aufzuarbeiten | |
|---|---|
| nachzuweisende Verbindungsklasse | katalytische/chemische Umsetzung vor REMPI-TOFMS Nachweis |
| Nitroaromaten (Sprengstoff-Nachweis, Nitro-PAH) | Reduktion der Nitrogruppe<br><br>Nitroaromaten werden zu den entsprechenden Aminoaromaten reduziert. Vorteile:<br><br>*hohe REMPI-Effizienz für Aminoaromaten<br><br>*optische Isomerenselektivität bleibt erhalten |

Tabelle 2 (fortgesetzt)

| Bisher beispielsweise ausgearbeitete chemisch/katalytische Reaktionen um Eigenschaften von Probenbestandteilen für einen REMPI-TOF Nachweis aufzuarbeiten | |
|---|---|
| nachzuweisende Verbindungsklasse | katalytische/chemische Umsetzung vor REMPI-TOFMS Nachweis |
| Carbonylverbindungen (z.B. Formaldehyd) | Reduktion und Nachweis der DNPH-Derivate (oder ähnlicher Derivate) der Aldehyde und Ketone<br><br>Kombination mit off-line (evtl. auch in-line möglich) Derivatisierungsschritt (z.B. DNPH-Derivatbildung:<br><br>a) REMPI-Nachweis der reduzierten DNPH-Carbonylderivate (Erhalt der Masseninformation)<br><br>(reduktive) Abspaltung des aromatischen DNPH-Restes und REMPI-Nachweis nur des DNPH-Restes (Verlust der Masseninformation) |
| Alkylierte Aromaten (z.B. methylierte Benzo[a]pyren) | katalytische Dealkylierung<br><br>Verwendung von z.B. $H_2$ Gas für eine katalytische in-line/off-line Dealkylierung: Die Alkylaromaten werden in ihre entsprechenden aromatischen Grundgerüste überführt |
| Halogenaromaten (z.B. chlorierte Dibenzodioxine) | katalytische Hydrodehalogenierung<br><br>Verwendung von $H_2$ Gas für eine katalytische in-line/off-line Hydrodehalogenierung: Halogenaromaten werden in ihre entsprechenden aromatischen Grundgerüste überführt (unter Verlust der primären, optischen Isomereninformation)<br><br>Deuterodehalogenierung<br><br>Verwendung von $D_2$ Gas für eine katalytische in-line/off-line Deuterodehalogenierung:<br><br>Die Halogenaromaten werden selektiv in ihre entsprechenden, partiell deuterierten aromatischen Grundgerüste überführt (unter Erhalt der optischen Isomereninformation) |

Fig. 1a Zweidimensionalität der REMPI-Ionisations Massenspektrometrie am Beispiel monohalogenierter Benzole: jedes Molekül wird durch seine Masse (von Fluor- nach Brombenzol: 97, 113 und 157 amu) und die optischen Resonanzionisationsübergänge (Peaks) beschrieben.

Fig. 1b REMPI-induzierte Massenspektren einer Mischung aus 1,4-Dichlornaphthalin, 1-Monochlordibenzo-p-dioxin und 2,8-Dichlordibenzofuran. Die obere Spur entspricht dem durch unselektive Ionisation erhaltenen Massenspektrum, die unteren Spuren zeigen jeweils das Ergebnis selektiver REMPI-Ionisation des Gemisches.

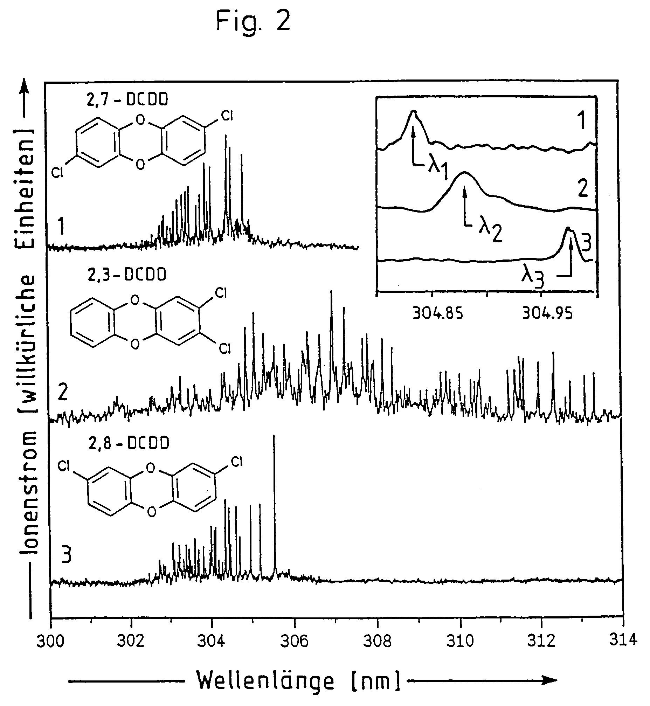

Fig. 2 REMPI -Spektren von den drei isomeren 1,7- , 1,8,- und 2,3-Dichlordibenzo-p-dioxinen (1, 2 und 3) sowie von 2-Monochlordibenzo-p-dioxin (4) und von 2,8-Dichlordibenzofuran (5). Der Insert zeigt daß eine isomerenselektive der PCDD möglich ist. Das REMPI-Spektrum von 2,8-Dichlordibenzofuran wurde mit der Zweifarben-Ionisationstechnik aufgenommen (da sich der Zwischenzustand unterhalb des halben Ionisationspotentials befindet), alle anderen Spektren sind mit der REMPI-Einfarbentechnik aufgenommen worden

Fig. 3 Aufbauskizze Kat-GC-REMPI-TOF/FID: Bei desem Aufbau befindet sich der Katalysator 1 vor der Trennsäule 5 des Gaschromatographen 8. Er ist in eine Heizeinheit 2 kontrolliert heizbar geführt. Nach der chromatographischen Separation gelangen die Analyte über eine Transfer-line 4 in das REMPI-TOFMS Spektrometer 6. Man erhält z. B. bei einem Einsatz der Hydrodechlorierungsreaktion für jede Injektion am Injektor 11 eine Zusammenfassung aller Chloraromatenisomere auf den chromatographischen Peak ihrer jeweiligen Grundgerüste (Summenbildung). In der Fig. 5 sind mit dieser Technik erzielte Ergebnisse (Kombination mit einem FID Detektor 9) dargestellt.

Fig. 4 Aufbauskizze GC-Kat-REMPI-TOF: Bei diesem Aufbau befindet sich der Katalysator 12 nach der Trennsäule 5. Man erhält daher z.B. bei einem Einsatz der Hydrodechlorierungsreaktion (der Abstimmung der lasermassenspektrometrischen Parameter (Wellenlänge und Masse) auf ein bestimmtes aromatisches Grundgerüst (z. B.

Benzol oder Dibenzo-p-dioxin) einen substanzselektiven Detektor für die entsprechenden Chloraromaten (polychlorierte Benzole bzw. polychlorierte Dibenzo-p-dioxine). Die gaschromatographische Selektivität (Isomerentrennung) bleibt dabei vollständig erhalten. Die lasermassenspektrometrische Selektivität verhindert dabei Interferenzen zu anderen Probenbestandteilen und erlaubt daher eine deutlich Reduktion des zeit- und kostenaufwendigen Probenvorbereitungaufwands. In der Fig. 6 sind mit dieser Technik erzielte Ergebnisse dargestellt.

Fig. 5 Anwendungsbeispiel Kat-GC-FID:
links: Gaschromatogramm (FID Detektion) einer Mischung aus Dibenzo-p-dioxin und 2-Chlordibenzo-p-dioxin. rechts: Gaschromatogramm (FID Detektion) der selben Mischung aus Dibenzo-p-dioxin und 2-Chlordibenzo-p-dioxin wie oben unter Verwendung der in-line Hydrodechlorierungsreaktion vor der Trennsäule: Das 2-Chlordibenzo-p-dioxin wird zu 100% zum Dibenzo-p-dioxin hydrodechloriert. Man erhält einen Summennachweis beider Verbindungen bei der Retentionszeit des unchlorierten Dibenzo-p-dioxins

Fig. 6 Anwendungsbeispiel GC-Kat-REMPI-TOF:
Drei GC-KAT-REMPI-TOF Chromatogramme unter Verwendung der Kombination eines in-line Hydrodechlorierungskatalysators und Jet-REMPI-MS zum subsatnzklassesnselektiveb Nachweis von Chloraromaten. Der Katalysator 12 ist hier hinter der analytischen Trennsäule 5 lokalisiert. Nach der Injektion an 11 durchlaufen die Verbindungen die Trennsäule 5 und erreichen nach ihrer spezifischen Retentionszeit den Katalysator 12. In diesem werden alle Chloraromaten zu ihren Grundgerüsten hydrodechloriert. Durch die Einstellung der Parameter des Lasermassenspektrometers 6 kann ein Grundgerüst selektiv detektiert werden. Im vorliegenden Beispiel wurden von oben nach unten je 200 ng Benzol (oberste Spur), Monochlorbenzol (mittlere Spur) und die drei isomeren Dichlorbenzole (untere Spur) injiziert. Die katalytische Hydrodechlorierung erlaubt einen Nachweis aller Chlorbenzol-Derivate auf der Masse und der Resonanzionisationswellenlänge des Benzols (259.11 nm, SIM auf m = 78 amu). Durch die hohe Selektivität der Jet-REMPI-TOFMS Methode kann bei den obigen Einstellungen nur Benzol nachgewiesen werden, mögliche isobare oder optische Interferentien sind durch Wellenlängen/Massenselektivität unterdrückt. Die Kombination von katalytischer Hydrodechlorierung und Jet-REMPI-MS stellt daher ein substanzklassenselektives Analyseverfahren dar.

Fig. 7 REMPI-TOF Massenspektren von Toluol (effusiver Direkteinlaß mit Wasserstoffgas als Trägergas und unter Vorschaltung eines Dealkylierungskatalysators, hier: gewöhnlicher Autokatalysator, nach Referenz [14]) bei zwei verschiedenen Dealkylierungkatalysator Betriebsbedingungen. Bei 309 °C findet praktisch keine Umsetzung statt (oben), man sieht den Toluolpeak (m = 92 amu) im Massenspektrum wie bei einem Aufbau ohne Katalysator. Bei einer Betriebstemperatur des Dealkylierungkatalysators von 500°C wird Toluol zu einem sehr großen Anteil zu Benzol dealkyliert, man sieht vor allem den Benzolpeak (m = 78 amu) im Massenspektrum.

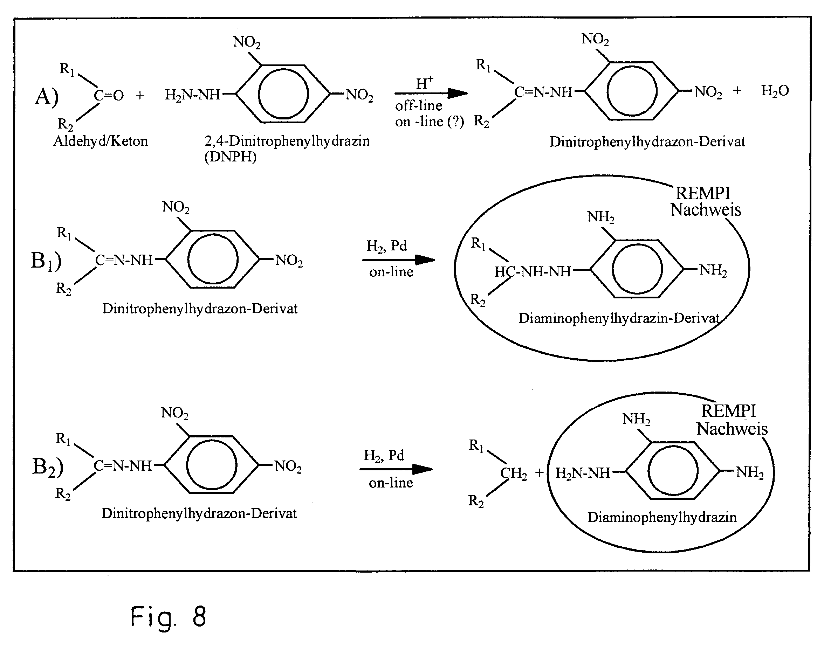

Fig. 8 Mögliche Derivatisierungstechnik zum Nachweis von Carbonylverbindungen mit REMPI-TOF

A) Bildung der Dinitrophenylhydrazon (DNPH)-Derivate der Carbonylverbindungen (off-line oder in-line)
$B_1$) Reduktion DNPH-Derivate zu den entsprechenden Diaminophenylhydrazin-Derivaten (in-line), REMPI Nachweis der letzteren.
$B_2$) Chemische Spaltung der (DNPH)-Derivate mit nachfolgendem REMPI-Nachweis der aromatischen Gruppe.

Bezugszeichenliste:

1. Chemischer oder katalytischer Reaktor vor der gaschromatographischen Trennsäule 5, hier beschichtete Fused Sileca Kapillare.
2. Kontrolliert heizbares Gehäuse für 1, hier flexibler Heizschlauch mit elektroischer Temperatursteuerung.
3. Kontrolliert heizbares Gehäuse für die Transfer-line 4, hier flexibler Heizschlauch mit elektronischer Temperatursteuerung.
4. Transfer-line zwischen Gaschromatograph und REMPI-TOFMS Spektrometer
5. Gaschromatographische Trennsäule, hier mit einer stationären Phase beschichtete Kapillare
6. Lasermassenspektrometer (REMPI-TOFMS), hier wie in Referenz [4] beschrieben
7. Laser für REMPI, siehe Referenz [4]
8. Gaschromatograph
9. Flammenionisationsdetekor (FID)
10. optional T-Stück für parallelen Betrieb eines FID 9 neben der REMPI-TOFMS Detektion
11. Injektor des Gaschromatographen
12. Chemischer oder katalytischer Reaktor nach der gaschromatographischen Trennsäule 5, hier beschichtete Fused Sileca Kapillare, die gleichzeitig als Transferline dient
13. Kontrolliert heizbares Gehäuse für 12, hier flexibler Heizschlauch mit elektroischer Temperatursteuerung.

Literaturverzeichnis:

[1]

a) U. Boesl, R. Zimmermann, C. Weickhardt, D Lenoir, K.-W. Schramm, A. Kettrup, E. W. Schlag; Chemosphere 29, 1994, 1429
b) R. Zimmermann, C. Weickhardt, U. Boesl, D. Lenoir, K.-W. Schramm, A. Kettrup, E. W. Schlag; Chemosphere 29, 1994, 187 und Referenzen aus dieser Arbeiten

[2]

a) U. Boesl, C. Weickhardt, R. Zimmermann, S. Schmidt, H. Nagel; SAE Technical Paper, Series 930083, 1993, 61
b) J. Franzen, R. Frey, A. Holle H. Betzold, W. Ulke, U Boesl; SAE Technical Paper Series 930082, 1993, 55
c) C. Weickhardt, U. Boesl, E. W. Schlag; Anal. Chem. 66, 1994, 1062

[3]

a) M. Beroza, R. Sarmiento; Anal. Chem. 36, 1964, 1744
b) R. I. Asai, F. A. Gunther, W. A. Westlake, Y. Iwata, J. Agr. Chem. 19, 1971, 396M
c) Chooke, G. Nickless, A. M. Prescott, D. J. Roberts; J. Chromat. 156, 1978, 293

[4] R. Zimmermann, U. Boesl, JH. J. Heger, R. R. Rohwer, E. K. Ortner, E. W. Schlag. A. Kettrup, J. High. Resol. Chroma togr. 20, 1997, 461

[5] R. Zimmermann, H. J. Heger, C. Yeretzian, H. Nagel, U. Boesl; Rapid Communic. Mass Spectrom. 10, 1996 XXX

[6] R. Zimmermann, H. J. Heger, A. Kettrup, U. Boesl, E. W. Schlag; Rapid Communic. Mass Spectrom. 11, 1997, 1095

[7]

a) J. M. Hayes, G. J. Small, Anal. Chem. 54, 1982, 1204
b) T. Imasaka, T. Okamura, N. Ishibashi, Anal. Chem. 1986, 2152

[8] A. Amirav, S. Dagan, Eur. Mass Spectrom. 3, 1997, 195

[9] C. Weickhardt, R. Zimmermann, U. Boesl, E. W. Schlag, Rapid Communic. Mass Spctrom. 7, 1993, 183

[10] G. Rhodes, R. B. Opsal, J. T. Meek, J. P. Reilly, Anal. Chem. 53, 1983, 280

[11] R. Zimmermann, C. Weickhardt, U. Boesl, E. W. Schlag, J. Mol. Struct. 327, 1994, 81

[12] H. Oser, R. Thanner, H.-H. Grotheer; Europ. Symp. Optics for Enviromental & Public Safety, München 1995, in press

[13] B. A. Williams, T. N. Tanada, T. A. Cool, Proceedings of the 24th International Symposiums on Combustion (The Combu stion Institute) 1992, 1587

[14] H. Nagel, Dissertation, Fakultät für Physik der TU München, in Vorbereitung für Anfang 1997

[15] K. Mohr, C. Nonn, J. Kolenda, H. Gass, D. Menke, J. Jager, Organobalogen Compounds 27, 1996, 93

[16] R. N. Dotter, C. H. Smith, M. K. Young, P. B. Kelly, A. D. Jones, E. M. McCauely, D. P. Y. Chang, Anal. Chem. 68, 1996, 2319

**Patentansprüche**

1. Verfahren zum Nachweis von Substanzen oder Substanzklassen wobei diese mit einer Detektionseinheit basierend auf dem Prinzip der resonanzverstärkten Mehrphotonenionisation (REMPI) nachgewiesen werden, dadurch gekennzeichnet, daß die Substanzen oder Substanzklassen bevor sie der Detektionseinheit zugeführt werden ganz oder teilweise chemisch verändert werden.

2. Verfahren nach dem Anspruch 1, dadurch gekennzeichnet, daß die Substanzen bevor sie ganz oder teilweise chemisch verändert werden, gaschromatographisch aufgetrennt werden.

3. Verfahren nach dem Anspruch 1 oder 2, dadurch gekennzeichnet, daß die Substanzen nachdem sie ganz oder teilweise chemisch verändert werden, gaschromatographisch aufgetrennt werden, wobei die chemische Veränderung nach dem GC-Injektor und vor der GC-Trennsäule erfolgt.

4. Verfahren nach einem der Ansprüche 1 bis 3, dadurch gekennzeichnet daß für die chemische Umsetzung ein Reaktor benutzt wird, der aus einer inwändig beschichteten Kapillare besteht, wobei die Beschichtung als chemisches Reagenz oder Katalysator dient.

5. Verfahren nach einem der Ansprüche 1 bis 4, dadurch gekennzeichnet, daß die nachzuweisenden Substanzklassen halogenierte Verbindungen (z. B. chlorierte Dibenzo-p-dioxine/Furane) sind, wobei der Reaktor eine mit einem Reduktionskatalysator beschichtete Kapillare ist und als Trägergas Wasserstoff benutzt wird.

6. Verfahren nach einem der Ansprüche 1 bis 4, dadurch gekennzeichnet, daß die nachzuweisenden Substanzklassen nitrierte Verbindungen (z. B. Trinitrotoluol, TNT) sind und als chemische Modifikation eine katalytische Reduzierung der Nitrogruppe unter Verwendung des Trägergases Wasserstoff derart angewandt wird, daß die nitrierten Verbindungen zu den entsprechenden aminosubstituierten Verbindungen reduzierte werden.

7. Verfahren nach einem der Ansprüche 1 bis 4, dadurch gekennzeichnet, daß die nachzuweisenden Substanzklassen Carbonylverbindungen (z.B. Aldehyde und Ketone) sind, wobei diese in einem, dem chromatographischen Schritt vorgeschaltetem, off-line oder in-line Derivatisierungsschritt mit einem aromatischen Rest verknüpft werden.

8. Verfahren nach einem der Ansprüche 1 bis 4, dadurch gekennzeichnet, daß die nachzuweisenden Substanzklassen alkylierte Aromaten sind, und als chemische in-line Modifikation eine katalytische Dealkylierung angewandt wird, welche die alkylierten Aromaten in ihre entsprechende aromatische Grundgerüste überführt.

Fig. 1a

EP 0 921 393 A2

# Fig. 1b

Fig. 2

Fig. 3

Fig. 4

Hydrodechlorierungs-GC-FID (Kat-GC-FID) Chromatogramme einer Mischung aus Dibenzo-p-dioxin (DD) und 2-Monochlorodibenzo-p-dioxin (2-MCDD) mit:

a) inaktivem Katalysator     b) aktivem Katalysator

DD     2-MCDD     DD

Fig. 5

EP 0 921 393 A2

GC-REMPI-MS Nachweis von Chlorbenzolen
nach katalytischer Transformation zu Benzol

*Injektion: 200 ng Benzol*
*Nachweis: λ= 259.12 nm, m=78 amu*

*Injektion: 200 ng Chlorbenzol*
*Nachweis: λ= 259.12 nm, m=78 amu*

*Injektion: je 200 ng o-,m- und p-Dichlorbenzol*
*Nachweis: λ= 259.12 nm, m=78 amu*

0          125          250          375          500

Retentionszeit [sec] ➝

Fig. 6

Fig. 7

Fig. 8

EP 0 921 393 A2